# EUROPEAN PATENT SPECIFICATION

(11) **EP 3 333 451 B1**
(45) Date of publication and mention of the grant of the patent: **13.03.2019**
(21) Application number: 17176481.4
(22) Date of filing: 16.06.2017
(51) Int. Cl.: F16G 5/18, F16G 13/06

(54) **CHAIN PIN RETENTION METHOD**
KETTENBOLZENRÜCKHALTEVERFAHREN
PROCÉDÉ DE RETENUE DE BROCHE DE CHAÎNE

(30) Priority: 07.12.2016 WO PCT/US2016/065247
(43) Date of publication of application: 13.06.2018
(73) Proprietor: Borgwarner Inc., Auburn Hills, Michigan 48326 (US)
(72) Inventor: Crowe, Monica A., Marcy, NY 13403 (US); Dunn, Nicholas R., Pine City, NY 14871 (US); Fornell, Douglas S., Ithaca, NY 14850 (US); Park, Woo-Serk, Ithaca, NY 14850 (US); White, Timothy K., Sterling Heights, MI 48312 (US); Wraight, Seth G. G., Ithaca, NY 14850 (US)
(74) Representative: Peterreins Schley

(56) References cited:
- CA-A1- 2 806 418
- DE-A1-102014 207 085
- GB-A- 2 178 130
- JP-A- 2015 129 565

## Description

### BACKGROUND OF THE INVENTION

### FIELD OF THE INVENTION

The invention pertains to the field of endless-loop power transmission elements. More particularly, the invention pertains to chain pin retention in a chain belt for a continuously variable transmission (CVT).

### DESCRIPTION OF RELATED ART

Some continuously variable transmissions (CVTs) use a chain belt and two pulleys (usually called "sheaves") which are connected by the chain belt. Each sheave has two halves with sloping inner faces, and the distance between the halves of the sheaves can be varied. Changing the inner distance of the sheaves varies the effective diameters of the sheaves by causing the load members (struts) on the chain belt which contact the sloping inner surfaces of the sheaves to move radially inward or outward from the axis of rotation. By having the sheaves expand or contract oppositely, the ratio of the transmission (the ratio of the rotational speed of the driving and driven sheaves) is changed by changing the position at which the load members of the chain belt contact the sloping inner surfaces of each of the sheaves.

Chain belts for a continuously variable transmission include lengthwise links with apertures which are connected to each other through pins or struts. Retaining elements, such as a spherical metal ball, metallic bead, hemispherical metallic element, cylindrical metallic element, and square metallic block are welded to the rounded, unprepared surface ends of the pins or struts and are used to secure the links against falling off of the struts or from becoming misaligned. The welded elements on the surface ends of the struts can easily break during handling of the chain due to variations of the weld and attachment to a rounded, unprepared surface.

A CVT transmission chain according to the preamble of claim 1 is known from DE102014207085A1 and from GB2178130A.

### SUMMARY OF THE INVENTION

A chain belt for a continuously variable transmission which has a plurality of links and a plurality of coupling members connecting the plurality of links together. Each of the coupling members has an outer perimeter, a first end with a first prepared surface, and a second end with a second prepared surface. The prepared surfaces extend a depth from the outer perimeter of the coupling member. A first retaining member is fastened to the first prepared surface of the coupling members and a second retaining member is fastened to the second prepared surface of the coupling members. The first and second retaining members retain the plurality of links on the coupling members.

### BRIEF DESCRIPTION OF THE DRAWING

Fig. 1 shows a perspective view of a chain belt of an embodiment which is not part of the present invention.
Fig. 2 shows a side view of the chain belt of an embodiment which is not part of the present invention.
Fig. 3 shows a cross-section along line 3-3 of the chain belt of Fig. 2 of an embodiment which is not part of the present invention.
Fig. 4 shows a cross-section along line 3-3 of the chain belt of Fig. 2 with retaining pins and associated bores in the coupling member of an alternate embodiment which is not part of the present invention.
Fig. 5 shows a cross-section along line 3-3 of the chain belt of Fig. 2 with retaining pins and associated bores in the coupling member of another alternate embodiment which is not part of the present invention.
Fig. 6 shows a perspective view of a chain belt of another embodiment which is not part of the present invention.
Fig. 7 shows a side view of the chain belt of another embodiment which is not part of the present invention.
Fig. 8 shows a cross-section along line 8-8 of the chain belt of Fig. 7 of another embodiment which is not part of the present invention.
Fig. 9 shows a top view of a chain belt of another embodiment which is not part of the present invention.
Fig. 10 shows a coupling member with a circular, prepared surface in another embodiment which is not part of the present invention.
Fig. 11 shows the coupling member of Fig. 10 with a hemispherical retaining member received by the circular prepared surface of the coupling member.
Fig. 12 shows a perspective view of a chain belt with coupling members each having the circular prepared surface and hemispherical retaining members shown in Figs. 10 and 11.
Fig. 13 shows a coupling member with a prepared surface of a rectangular notch in another embodiment of the present invention.
Fig. 14 shows the coupling member of Fig. 13 with a cylindrical retaining member.
Fig. 15 shows a perspective view of a chain belt with a coupling member having a cylindrical retaining member shown in Figs. 13 and 14.
Fig. 16 shows the coupling member of Fig. 13 with a rectangular prism retaining member.
Fig. 17 shows a chain belt with a coupling member having a prepared surface of a rectangular notch receiving a rectangular prism retaining member shown in Figs. 13 and 16.
Fig. 18 shows a coupling member with a prepared surface of a flat in another embodiment which is not part of the invention.
Fig. 19 shows the coupling member of Fig. 18 with a cylindrical retaining member.
Fig. 20 shows a perspective view of a chain belt with a coupling member having a prepared surface of a flat and cylindrical retaining member shown in Figs. 18 and 19.
Fig. 21 shows the coupling member of Fig. 18 with a rectangular prism retaining member.
Fig. 22 shows a perspective view of a chain belt with a coupling member having a prepared surface of flat and rectangular prism retaining member shown in Figs. 18 and 21.
Fig. 23 shows a coupling member with a prepared surface of a v-notch in another embodiment of the invention.
Fig. 24 shows the coupling member of Fig. 23 with a cylindrical retaining member.
Fig. 25 shows a perspective view of a chain belt with the prepared surface of a v-notch and cylindrical retaining member shown in Figs. 23 and 24.
Fig. 26 shows the coupling member of Fig. 23 with a rectangular prism retaining member.
Fig. 27 shows a perspective view of a chain belt with the prepared surface of a v-notch and rectangular prism retaining member shown in Figs. 23 and 26.

### DETAILED DESCRIPTION OF THE INVENTION

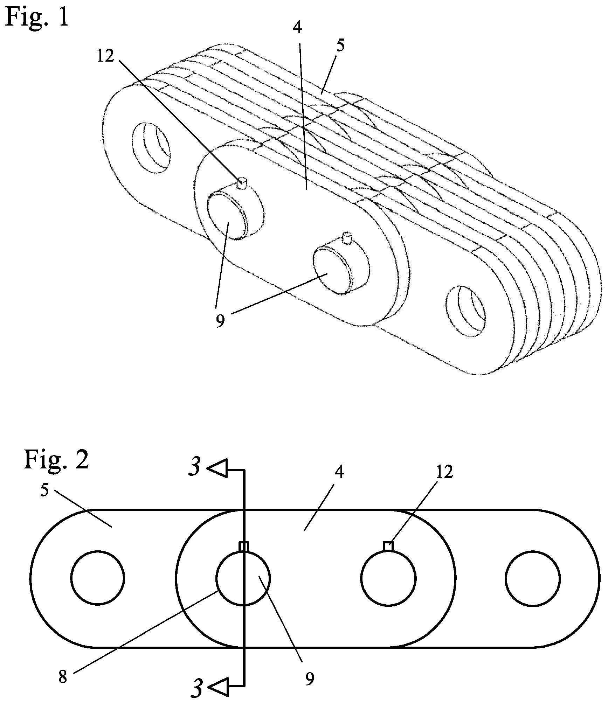

Figs. 1-5 show a chain belt for a continuously variable transmission. The chain belt 3 has alternating sets of links 4 and 5. Each of the links 4-5 has at least one aperture 8 and preferably has a set of apertures. The sets of links 4-5 are coupled together through a coupling member 9 which serves as a load member or strut for the CVT. It should be noted that the number of links may also vary from the links shown in the Figures within the scope of the invention.

The coupling member 9 has a first end 9a and a second end 9b, with the alternating sets of links 4-5 being threaded on the coupling member 9 between the first end 9a and the second end 9b. The coupling member 9 also includes a first bore 10 at the first end 9a and a second bore 11 at the second end 9b for each receiving a retaining member 12. The retaining member 12 prevents the sets of links 4-5 from falling off of the coupling member 9 and from being misaligned. The position of the bores 10 at the first end 9a and bore 11 at the second end 9b of the coupling member 9 may vary from the position shown in the Figures and is dependent upon the width W of the connected sets of links 4-5.

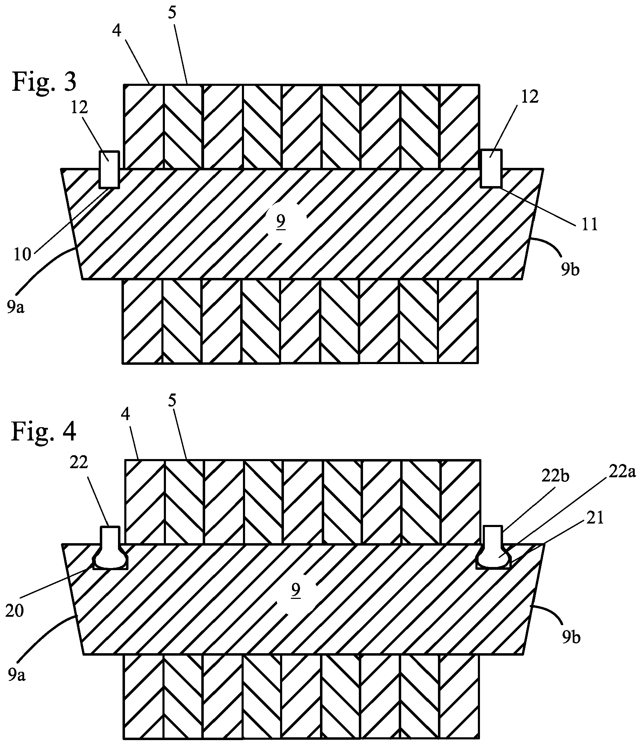

As shown in Fig. 3, each of the bores 10, 11 of the coupling member 9 may receive a retaining member 12, such as a pin. The pin 12 may be welded into the bores 10, 11. Alternatively, the bores 10, 11 may be sized to be slightly smaller or substantially the same size than the pin 12, such that the pin 12 is secure in the bore once inserted (press-fit) without welding.

The pin 12 may be rectangular, square, round or a combination of shapes. The bores 10, 11 may be round, square, rectangular or a combination of shapes. The bores 10, 11 may be blind holes, through holes, staged holes or multiple staged holes.

In an alternate embodiment as shown in Fig. 4, the bores 20, 21 of the coupling member 9 are staged or multiple staged. The pins 22 may be shaped with a head portion 22a and a tail portion 22b and be mushroom shaped. The bores 20, 21 may be shaped to receive the head portion 22a of the pin 22 but not allow the head 22a to be removed from the bore 20, 21, essentially riveting the pin 22 to the bores 20, 21.

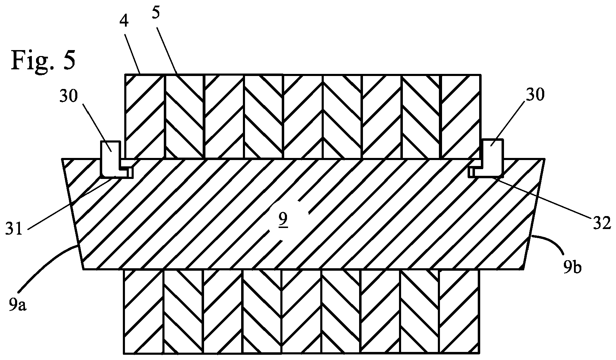

In another embodiment, the bores 31, 32 of the coupling member 9 may be an L-shape 31, 32 to allow a pin 30 to be press fit or snug fit and then bent such that a portion 33 of the pin 30 is captured in the L-shaped bore 31, 32 of the coupling member and cannot be removed as shown in Fig. 5.

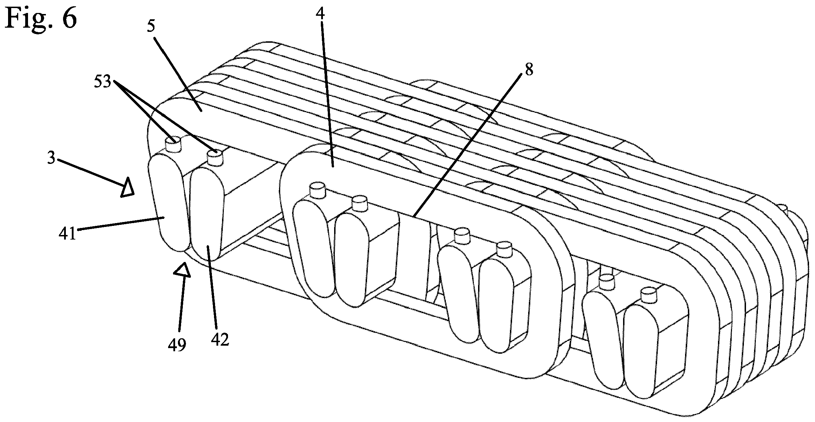

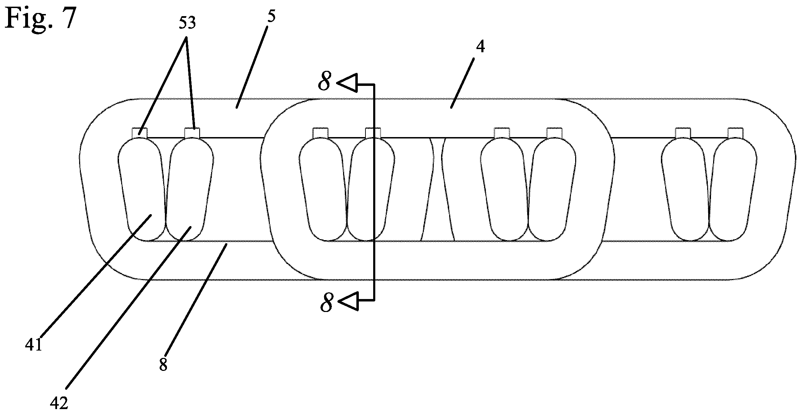

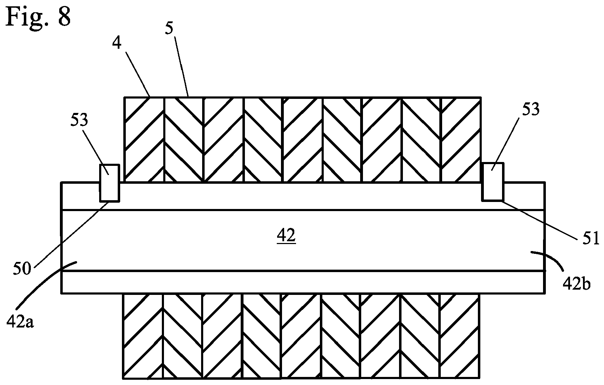

The coupling member 9 may be a single connecting pin as shown in Figures 1-5 or may be connecting pins composed of a joint pin and a rocker pin as shown in Figures 6-9.

Referring to Figs. 6-9, a chain belt 3 has alternating sets of links 4 and 5. Each of the links 4-5 has at least one aperture 8. The sets of links 4-5 are coupled together through coupling members 49 which serves as load members or struts for the CVT. The coupling members 49 include a joint pin 41 and a rocker pin 42. The joint pin 41 and rocker pin 42 each have a first end 41a, 42a and a second end 41b, 42b. The alternating set of links 4-5 are threaded onto the coupling members 49 between the first ends 41a, 42a and second ends 41b, 42b of the joint pin 41 and rocker pin 42. The joint pin 41 and rocker pin 42 each include a first bore 50 at the first end 41a, 42a and a second bore 51 at the second end 41b, 42b for receiving a retaining member 53. The retaining member 53 prevents the sets of links 4-5 from falling off of the coupling members 49 and from being misaligned. The position of the bores 50, 51 at the first end 41a, 42a and at the second end 41b, 42b of the coupling member 49 may vary from the position shown in the figures and is dependent upon the width W of the connected sets of links 4-5. Furthermore, the bores 50, 51 may be shaped as shown in Figs. 3-5. Similarly, the associated retaining member 53 may also be shaped as shown in Figs. 3-5.

In the embodiments described above, the bore in the coupling member may have an entrance on the surface of the coupling member for first receiving the retaining member that can be smaller in diameter than the bore present within the coupling member. The bore may have varying diameters or are staged or multi-staged. The retaining members in some embodiments are mechanically coupled to the coupling member through a process such as welding or riveting. In some of these embodiments, the retaining member itself changes shape substantially to mechanically attach the retaining members into the bores.

In the embodiment of present invention, the retaining members protrude from the coupling member an amount that prevents the aperture of the links from passing over the retaining links, therefore, preventing the links from falling of the coupling members.

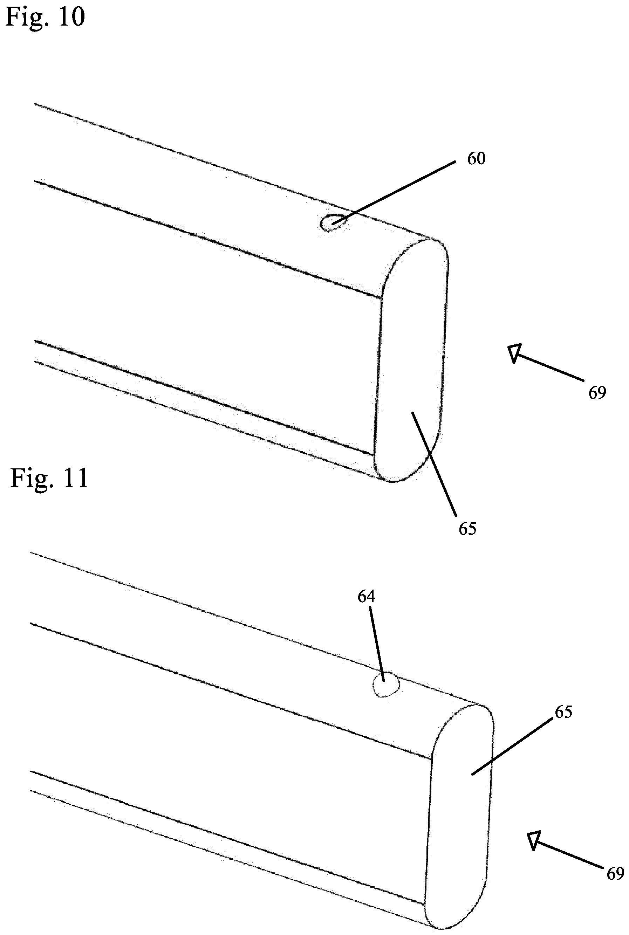

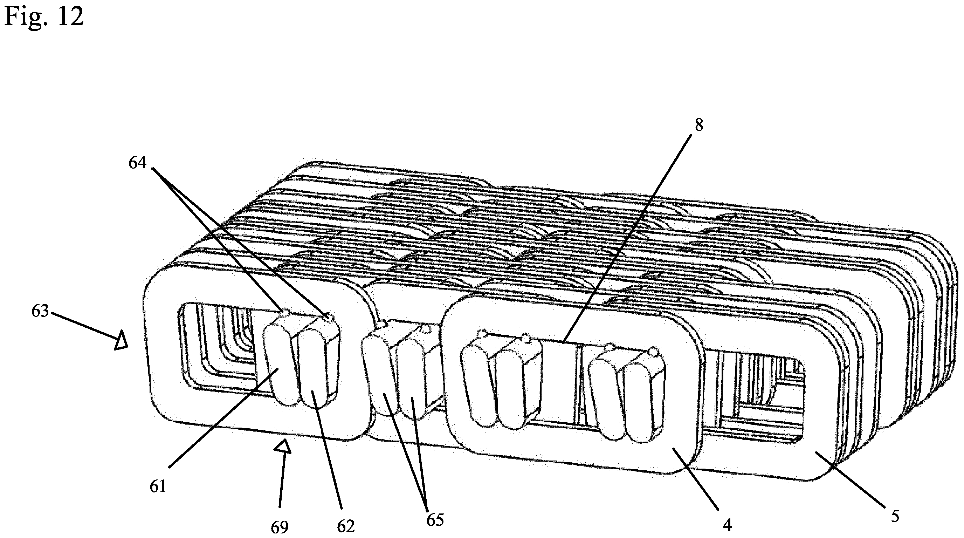

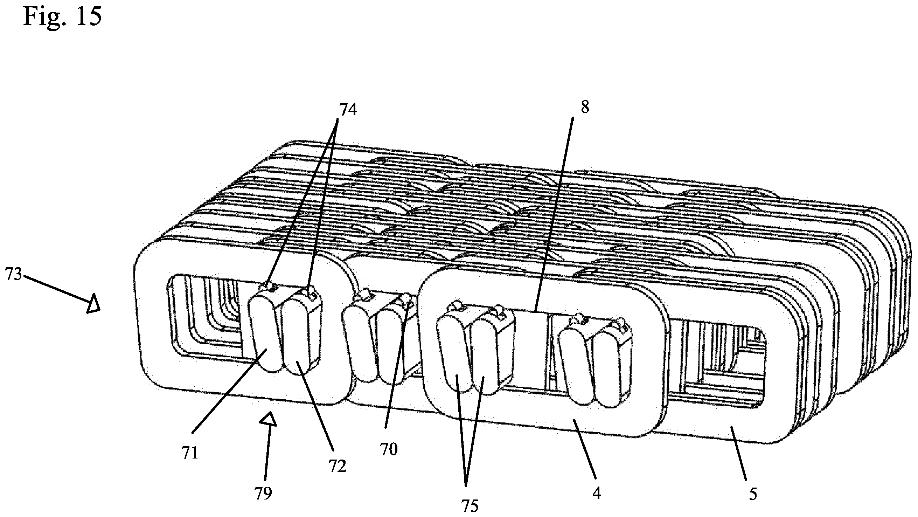

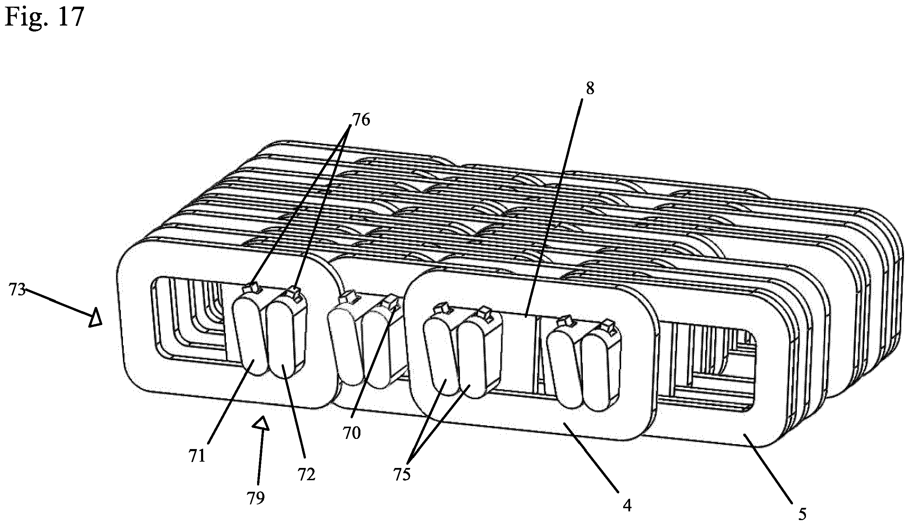

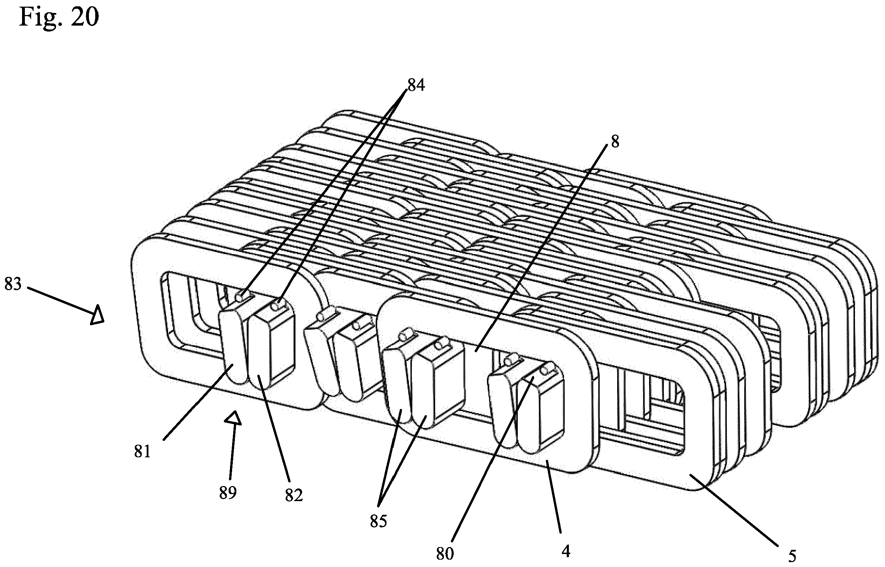

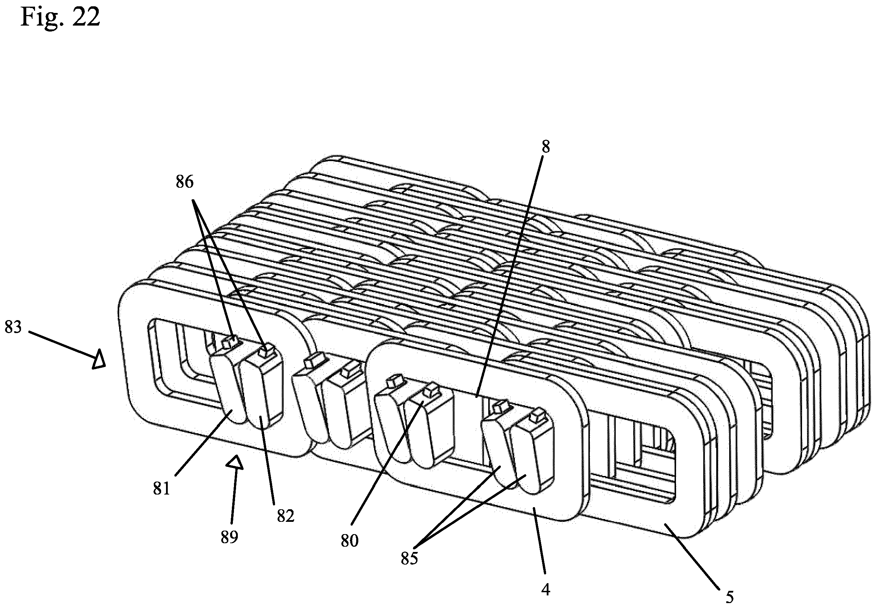

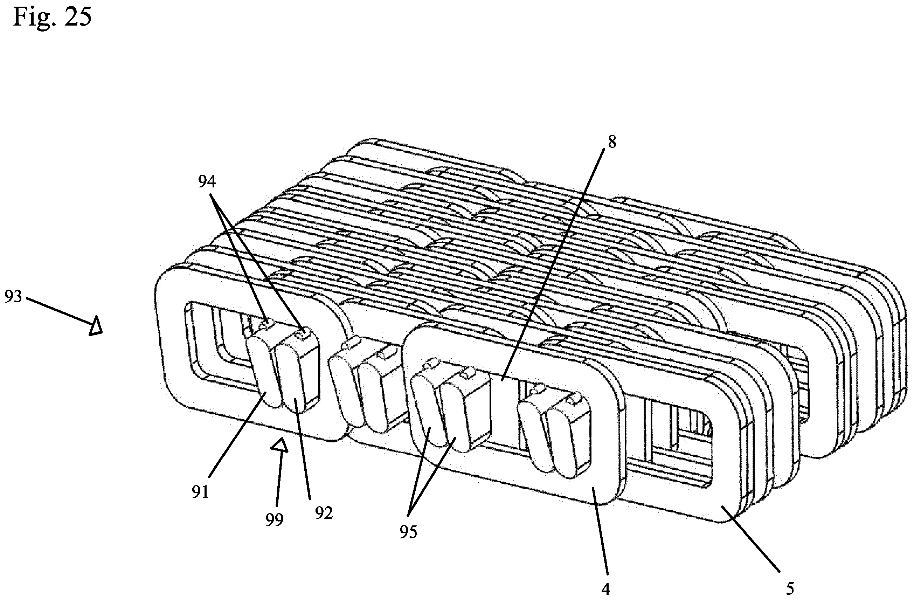

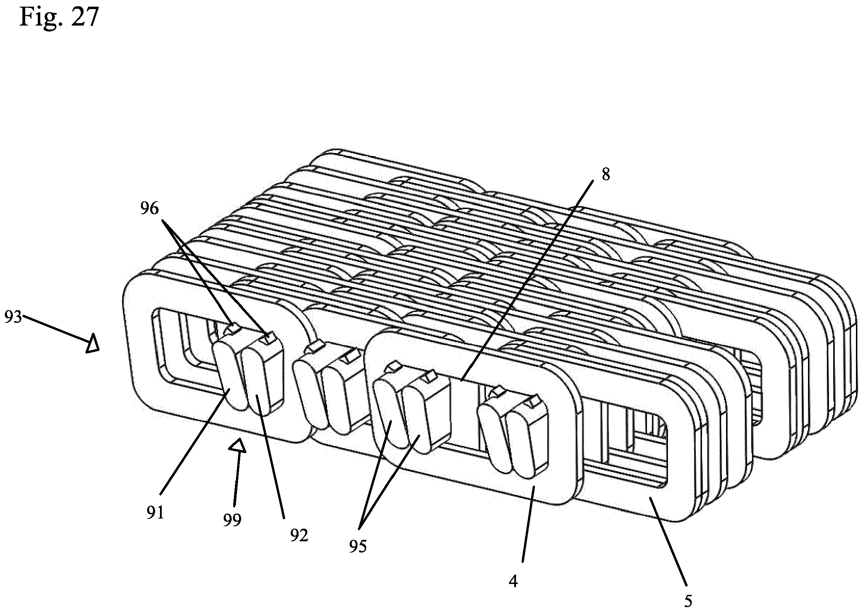

In other embodiments, the retaining member is received by a prepared surface of the coupling member. The prepared surface of the coupling member is a surface which is non-spherical or unrounded and interrupts the outer perimeter of the coupling members. The prepared surface may be an indentation such as a flat, groove or a notch cut. The geometry of the prepared surface may or may not match the shape of the retaining member it receives. The retaining member can be of any corresponding shape, including, but not limited to, hemispherical, spherical, circular, round, cylindrical, square, or rectangular. This prepared surface of the coupling member is used to position the retaining member, while the actual attachment process is achieved by welding or another metallurgical attachment. This means there is no mechanical attachment of the retaining member to the coupling member, only a metallurgical attachment, and the retaining element does not change shape during the attachment process. The retaining member is preferably metallic. The embodiments in Figs. 10-27 maintain the advantage of mechanical positioning that are also shown in Figs. 1-9.

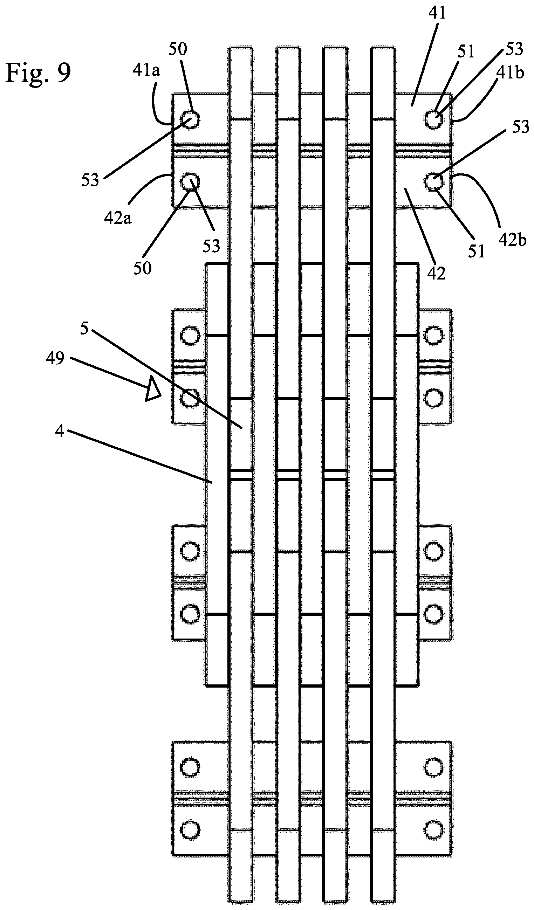

Figs. 10-12 show a prepared surface 60 and a hemispherical retaining member 64 on coupling members 69 of a chain belt 63. The chain belt 63 has alternating sets of links 4 and 5. Each of the links 4-5 has at least one aperture 8. The sets of links 4-5 are coupled together through coupling members 69 which serve as load members or struts for the CVT. The coupling members 69 include a joint pin 61 and a rocker pin 62. The joint pin 61 and rocker pin 62 each have a first end 65 and a second end (see Fig. 9). The alternating set of links 4-5 are threaded onto the coupling members 69 between the first and second ends of the joint pin 61 and rocker pin 62. The joint pin 61 and rocker pin 62 each include a first circular prepared surface 60 at a first end 65 for receiving a first retaining member 64 and although not shown, a second circular prepared surface 60 at a second end of the joint pin 61 and the rocker pin 62. The first circular prepared surface 60 and the second circular prepared surface 60 are preferably formed to the same shape and geometry.

The prepared surfaces 60 at the ends of the coupling members 69 are preferably equidistant from the ends of the coupling members 69. In this embodiment, the prepared surface 60 is preferably a circular bore. The prepared surface 60 is set a depth from the outer perimeter of the coupling member 69 to receive a hemispherical retaining member 64. The hemispherical retaining member 64 is welded or otherwise coupled to the prepared surface 60 of the coupling members 69. The hemispherical retaining member 64 prevents the sets of links 4-5 from falling off of the coupling members 69 and from being misaligned. The position of the circular prepared surface 60 at the first end and the second end of the coupling members 69 may vary, and is dependent upon the width W of the connected sets of links 4-5.

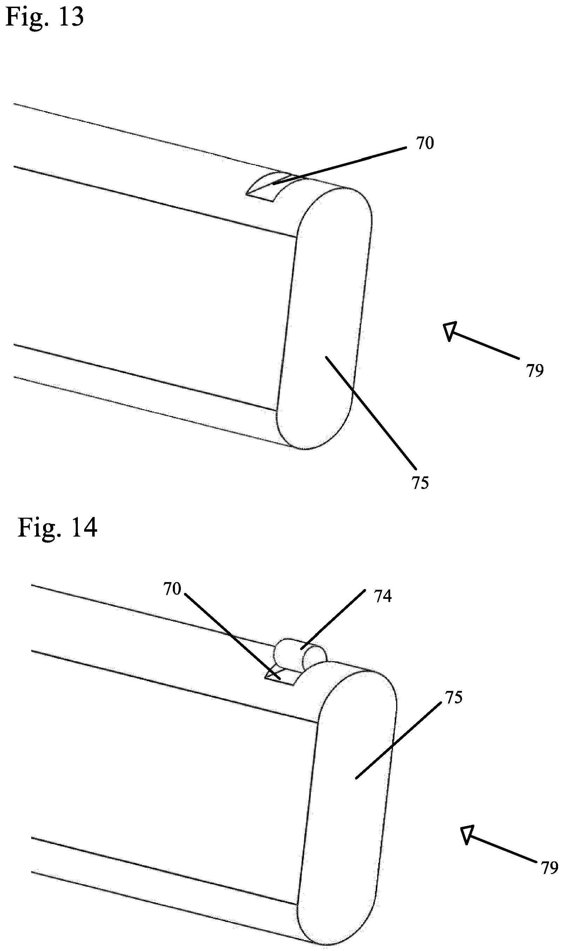

Figs. 13-15 show a prepared surface 70 and a cylindrical retaining member 74 on coupling members 79 of a chain belt 73. The chain belt 73 has alternating sets of links 4 and 5. Each of the links 4-5 has at least one aperture 8. The sets of links 4-5 are coupled together by coupling members 79 which serve as load members or struts for the CVT. The coupling members 79 include a joint pin 71 and a rocker pin 72. The joint pin 71 and rocker pin 72 each have a first end 75 and a second end (see Fig. 9). The alternating set of links 4-5 are threaded onto the coupling members 79 between the first and second ends of the joint pin 71 and rocker pin 72. The joint pin 71 and rocker pin 72 each include a first prepared surface 70 at a first end 75 for receiving a first retaining member 74 and although not shown, a second prepared surface 70 at a second end of the joint pin 71 and the rocker pin 72 for receiving a second retaining member.

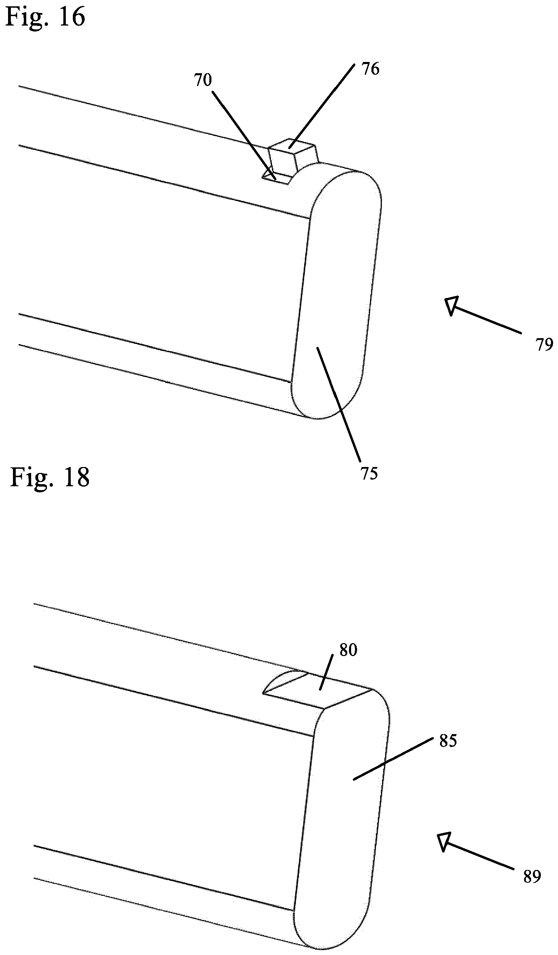

The prepared surfaces 70 at the ends of the coupling members 79 are preferably equidistant from the ends of the coupling members 79. In this embodiment, the prepared surface 70 is preferably a rectangular notch. The prepared surface 70 is set a depth from the outer perimeter of the coupling member 79 to receive a cylindrical retaining member 74. In an alternate embodiment, the retaining member 76 is a rectangular prism as shown in Figures 16-17. The cylindrical retaining member 74 or the rectangular prism retaining member 76 are welded or otherwise coupled to the prepared surface 70 of the coupling members 79. The retaining members 74, 76 prevent the sets of links 4-5 from falling off of the coupling members 79 and from being misaligned. The position of the notches 70 at the first end and the second end of the coupling members 79 may vary, and is dependent upon the width W of the connected sets of links 4-5. It should be noted that a rectangular prism is shown for the retaining member, but other shapes such as cube may also be used. It should be noted that the notch 70 provides a precise location for placement of the retaining member 74, 76 and consistent contact between the retaining member 74, 76 and the coupling member 79.

Figs. 18-20 show a prepared surface 80 and a cylindrical retaining member 84 on coupling members 89 of a chain belt 83. The chain belt 83 has alternating sets of links 4 and 5. Each of the links 4-5 has at least one aperture 8. The sets of links 4-5 are coupled together by coupling members 89, which serve as load members or struts for the CVT. The coupling members 89 include a pin 81 and a rocker pin 82. The pin 81 and rocker pin 82 each have a first end 85 and a second end (see Fig. 9). The alternating set of links 4-5 are threaded onto the coupling members 89 between the first and second ends of the pin 81 and the rocker pin 82. The pin 81 and the rocker pin 82 each include a first prepared surface 80 and at a first end 85 for receiving a first retaining member 84 and although not shown, a second prepared surface 80 at a second end of the pin 81 and the rocker pin 82 for receiving a second retaining member.

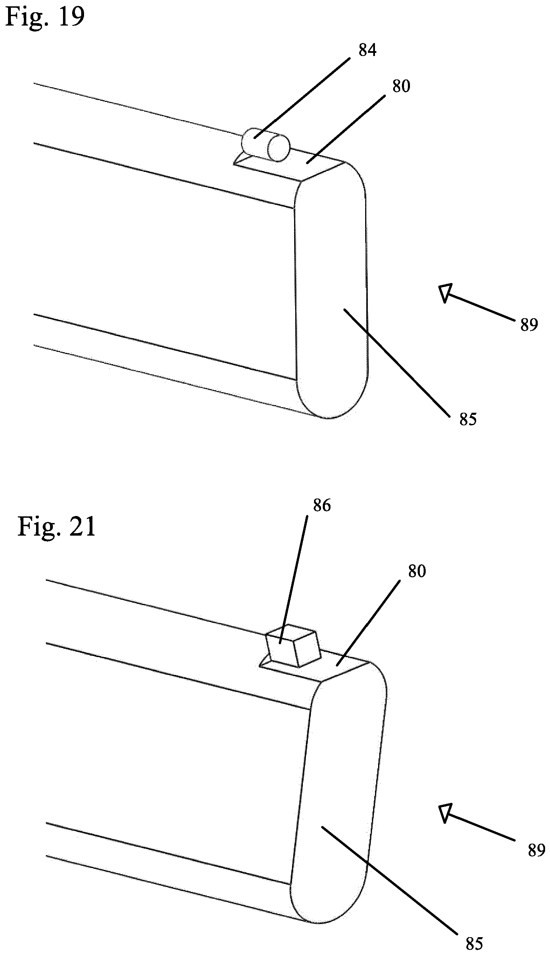

The prepared surfaces 80 at the ends of the coupling members 89 are preferably equidistant from the ends of the coupling members 89. In this embodiment, the prepared surface 80 is preferably an L-shaped flat 80 which is cut into the end of the coupling member 89 and is perpendicular to the rounded surface of the coupling member 89. The prepared surface 80 is set a depth from the outer perimeter of the coupling member 89 to receive a cylindrical retaining member 84. In an alternate embodiment, the retaining member 86 is a rectangular prism as shown in Figures 21-22. The cylindrical retaining member 84 or the rectangular prism retaining member 86 are welded or otherwise coupled to the prepared surface 80 of the coupling members 89. The cylindrical retaining member 84 or the rectangular prism retaining member 86 are preferably placed on the flat 80 such that a flat surface of the retaining member 84, 86 is adjacent the depth of the flat 80. The retaining members 84, 86 prevent the sets of links 4-5 from falling off of the coupling members 89 and from being misaligned. The position of the flats 80 at the first end and the second end of the coupling members 89 may vary, and is dependent upon the width W of the connected sets of links 4-5. It should be noted that a rectangular prism is shown for the retaining member, but other shapes such as cube may also be used. Additionally, the flat 80 is of a shape that does complement or is of the same geometry as the retaining member 84.

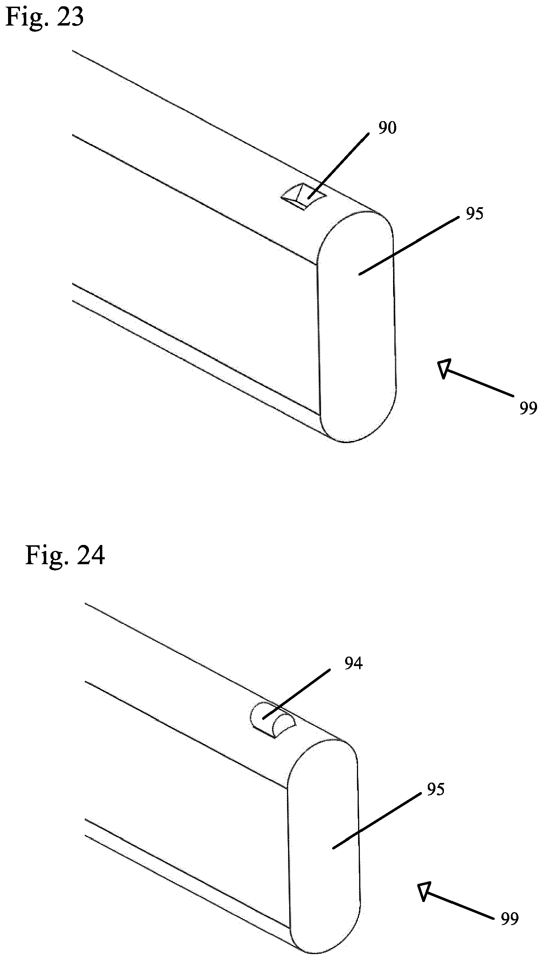

Figs. 23-25 show a prepared surface 90 and a cylindrical retaining member 94 on coupling members 99 of a chain belt 93. The chain belt 93 has alternating sets of links 4 and 5. Each of the links 4-5 has at least one aperture 8. The sets of links 4-5 are coupled together by coupling members 99, which serve as load members or struts for the CVT. The coupling members 99 include a pin 91 and a rocker pin 92. The pin 91 and rocker pin 92 each have a first end 95 and a second end (see Fig. 9). The alternating set of links 4-5 are threaded onto the coupling members 99 between the first and second ends of the pin 91 and the rocker pin 92. The pin 91 and the rocker pin 92 each include a first prepared surface 90 and at a first end 95 for receiving a first retaining member 94 and although not shown, a second prepared surface 90 at a second end of the pin 91 and the rocker pin 92 receives a second retaining member.

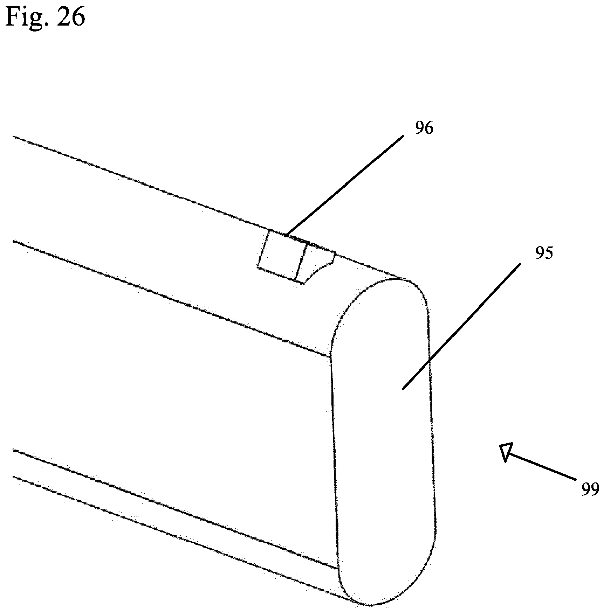

The prepared surfaces 90 at the ends of the coupling members 99 are preferably equidistant from the ends of the coupling members 99. In this embodiment, the prepared surface 90 is preferably V-shaped notch 90 which is cut into the coupling member 99 from the rounded surface of the coupling member 99. The prepared surface 90 is set a depth from the outer perimeter of the coupling member 99 to receive a cylindrical retaining member 94. In an alternate embodiment, the retaining member 96 is a rectangular prism as shown in Figures 26-27. The cylindrical retaining member 94 or the rectangular prism retaining member 96 are welded or otherwise coupled to the prepared surface 90 of the coupling members 99. The retaining members 94, 96 prevent the sets of links 4-5 from falling off of the coupling members 99 and from being misaligned. The position of the v-shaped notch 90 at the first end and the second end of the coupling members 99 may vary, and is dependent upon the width W of the connected sets of links 4-5. It should be noted that a rectangular prism is shown for the retaining member, but other shapes such as cube may also be used.

Although not shown, each of the rocker pins and joint pins in Figs. 10-27 preferably include a second retaining bore, groove, flat or notch on a second end to receive a second retaining member, similar to what is shown in Fig. 9.

Any of the prepares surfaces of the coupling members of Figs. 10, 13, 18 and 23 could be used in the pins of Figs. 1-5. The coupling members shown in Figs. 10-27 may be a single connecting pin as shown in Figs. 1-5 or may be connecting pins composed of a joint pin and a rocker pin as shown in Figs. 6-9 and Figs. 10-27. Similarly, any of the retaining members shown in Figs. 11, 13, 14, 16, 18, 19, 21, 24 and 26 could be used as the retaining member 12 in Figs. 1-5.

It should be noted that the links and coupling member are shown generically and that any design of the links or types of coupling members may be used within the scope of the invention. It should also be noted that the number of links may also vary from the links shown in the Figures within the scope of the invention.

It should be noted that while in the Figures both of the first prepared surface and the second prepares surface at the first end and the second end of the coupling member were shown as being the same, any combination of prepared surfaces and associated retaining members disclosed above and in Figs. 3-27 may be used.

The prepared surfaces 60, 70, 80, 90 of the coupling member 69, 79, 89, 99 may vary at one end of the coupling member relative to the other end of the coupling member. For example, a first end of the coupling member 69, 79, 89, 99 can have a prepared surface of a v-shaped notch 90 and the opposite end could have a prepared surface of a rectangular notch 70. The retaining member 64 , 74, 76, 84, 86, 94, 96 received by the prepared surfaces at either end of the coupling member may be the same shape or a retaining member of a first shape may be received at one end of the coupling member and the opposite end of the coupling member may receive a different shape. For example, the prepared surface of a v-shaped notch 90 at a first end of the coupling member can receive a cylindrical retaining member 94 and a prepared surface of a rectangular notch 70 at the second end of the coupling member can receive a rectangular prism retaining member 76.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

### EMBODIMENTS

Although the present invention is defined in the attached claims, it should be understood that the present invention can also (alternatively) be defined in accordance with the following embodiments:
1. A chain belt for a continuously variable transmission, the chain belt comprising:
   a plurality of links;
   a plurality of coupling members connecting the plurality of links together, each coupling member having a first end with a first bore and a second end with a second bore;
   a first retaining pin fastened within the first bore of each of the coupling members; and
   a second retaining pin fastened within the second bore of each of the coupling members.
2. The chain belt of embodiment 1, wherein the first retaining pin and the second retaining pin are fastened within the first bore and the second bore by welding.
3. The chain belt of embodiment 1, wherein the first retaining pin and the second retaining pin are fastened within the first bore and the second bore by press fit of the first and second retaining pins in the first and second bores.
4. The chain belt of embodiment 1, wherein at least one of the first bore and the second bore are L-shaped.
5. The chain belt of embodiment 4, wherein the first retaining pin and the second retaining pin are fastened within the first bore and the second bore by bending the first retaining pin and the second retaining pin after the first and second retaining pins are inserted into the first and second bores.
6. The chain belt of embodiment 1, wherein at least one of the first bore and the second bore is a through hole.
7. The chain belt of embodiment 1, wherein at least one of the first bore and the second bore are staged holes.
8. The chain belt of embodiment 1, wherein the coupling members comprise at least one rocker pin.
9. The chain belt of embodiment 1, wherein the coupling members comprise a pin.
10. The chain belt of embodiment 1, wherein at least one of the first bore and the second bore are blind holes.
11. The chain belt of embodiment 1, wherein at least one of the first bore and the second bore are multi-staged holes.

## Claims

1. A chain belt (3) for a continuously variable transmission, the chain belt (3) comprising:
a plurality of links (4, 5);
a plurality of coupling members (79, 99) having a rounded surface outer perimeter, the plurality of coupling members (79, 99) connecting the plurality of links (4, 5) together,
**characterized in that**:
each coupling member (79, 99) has a first end (75, 95) with a first prepared surface (70, 90) and a second end with a second prepared surface (70, 90), the first prepared surface (70, 90) and the second prepared surface (70, 90) interrupting the rounded surface of the outer perimeter and each comprising a notch cut extending a depth from the outer perimeter of the coupling member (79, 99);
a first retaining member (74, 76, 94, 96) fastened through a metallurgic attachment to the first prepared surface (70, 90) of the coupling members (79, 99); and
a second retaining member (74, 76, 94, 96) fastened through a metallurgic attachment to the second prepared surface (70, 90) of the coupling members (79, 99).

2. The chain belt (3) of claim 1, wherein the notches of the first prepared surface (70) and the second prepared surface (70) are rectangular and the first prepared surface (70) receives a first cylindrical retaining member (74) and the second prepared surface (70) receives a second cylindrical retaining (74) member.

3. The chain belt (3) of claim 1, wherein the notches of the first prepared surface (70) and the second prepared surface (70) are rectangular and the first prepared surface (70) receives a first rectangular prism retaining member (76) and the second prepared surface (70) receives a second rectangular prism retaining member (76).

4. The chain belt (3) of claim 1, wherein the notches of the first prepared surface (90) and the second prepared surface (90) are v-shaped and the first prepared surface (90) receives a first rectangular prism retaining member (96) and the second prepared surface (90) receives a second rectangular prism retaining member (96).

5. The chain belt (3) of claim 1, wherein the notches of the first prepared surface (90) and the second prepared surface (90) are v-shaped and the first prepared surface (90) receives a first cylindrical retaining member (94) and the second prepared surface (90) receives a second cylindrical retaining member (94).

6. The chain belt (3) of claim 1, wherein the first retaining member (74, 76, 94, 96) is fastened to the first prepared surface (70, 90) and the second retaining member (74, 76, 94, 96) is fastened to the second prepared surface (70, 90) by welding

7. The chain belt (3) of claim 1, wherein the coupling members (79, 99) comprise at least one rocker pin (72, 92).

8. The chain belt (3) of claim 1, wherein the coupling members (79, 99) comprise a pin (71, 72, 91, 92).

## Patentansprüche

1. Kettenriemen (3) für ein stufenlos verstellbares Getriebe, wobei der Kettenriemen (3) Folgendes umfasst:
eine Mehrzahl von Verbindungen (4, 5);
eine Mehrzahl von Kopplungselementen (79, 99) mit einem Außenumfang in Form einer abgerundeten Fläche, wobei die Mehrzahl von Kopplungselementen (79, 99) die Mehrzahl von Verbindungen (4, 5) miteinander verbindet,
**dadurch gekennzeichnet, dass**:
jedes Kopplungselement (79, 99) ein erstes Ende (75, 95) mit einer ersten bearbeiteten Fläche (70, 90) und ein zweites Ende mit einer zweiten bearbeiteten Fläche (70, 90) aufweist, wobei die erste bearbeitete Fläche (70, 90) und die zweite bearbeitete Fläche (70, 90) die abgerundete Fläche des Außenumfangs unterbrechen und jede eine Einkerbung umfasst, die sich eine Tiefe vom Außenumfang des Kopplungselements (79, 99) erstreckt;
ein erstes Rückhalteelement (74, 76, 94, 96), das durch eine metallurgische Befestigung an der ersten bearbeiteten Fläche (70, 90) der Kopplungselemente (79, 99) befestigt ist; und
ein zweites Rückhalteelement (74, 76, 94, 96), das durch eine metallurgische Befestigung an der zweiten bearbeiteten Fläche (70, 90) der Kopplungselemente (79, 99) befestigt ist.

2. Kettenriemen (3) nach Anspruch 1, wobei die Kerben der ersten bearbeiteten Fläche (70) und der zweiten bearbeiteten Fläche (70) rechteckig sind und die erste bearbeitete Fläche (70) ein erstes zylindrisches Rückhalteelement (74) aufnimmt und die zweite bearbeitete Fläche (70) ein zweites zylindrisches Rückhalteelement (74) aufnimmt.

3. Kettenriemen (3) nach Anspruch 1, wobei die Kerben der ersten bearbeiteten Fläche (70) und der zweiten bearbeiteten Fläche (70) rechteckig sind und die erste bearbeitete Fläche (70) ein erstes Rückhalteelement (76) in Form eines rechteckigen Prismas aufnimmt und die zweite bearbeitete Fläche (70) ein zweites Rückhalteelement (76) in Form eines rechteckigen Prismas aufnimmt.

4. Kettenriemen (3) nach Anspruch 1, wobei die Kerben der ersten bearbeiteten Fläche (90) und der zweiten bearbeiteten Fläche (90) V-förmig sind und die erste bearbeitete Fläche (90) ein erstes Rückhalteelement (96) in Form eines rechteckigen Prismas aufnimmt und die zweite bearbeitete Fläche (90) ein zweites Rückhalteelement (96) in Form eines rechteckigen Prismas aufnimmt.

5. Kettenriemen (3) nach Anspruch 1, wobei die Kerben der ersten bearbeiteten Fläche (90) und der zweiten bearbeiteten Fläche (90) V-förmig sind und die erste bearbeitete Fläche (90) ein erstes zylindrisches Rückhalteelement (94) aufnimmt und die zweite bearbeitete Fläche (90) ein zweites zylindrisches Rückhalteelement (94) aufnimmt.

6. Kettenriemen (3) nach Anspruch 1, wobei die Befestigung des ersten Rückhalteelements (74, 76, 94, 96) an der ersten bearbeiteten Fläche (70, 90) und die Befestigung des zweiten Rückhalteelements (74, 76, 94, 96) an der zweiten bearbeiteten Fläche (70, 90) durch Schweißen erfolgt.

7. Kettenriemen (3) nach Anspruch 1, wobei die Kopplungselemente (79, 99) zumindest einen Schwenkbolzen (72, 92) umfassen.

8. Kettenriemen (3) nach Anspruch 1, wobei die Kopplungselemente (79, 99) einen Bolzen (71, 72, 91,92) umfassen.

## Revendications

1. Courroie à chaîne (3) pour une transmission à variation continue, la courroie à chaîne (3) comprenant:
une pluralité de maillons (4, 5);
une pluralité d'éléments de couplage (79, 99) présentant un périmètre extérieur à surface arrondie, la pluralité d'éléments de couplage (79, 99) connectant la pluralité de maillons (4, 5) les uns aux autres,
**caractérisée en ce que**:
chaque élément de couplage (79, 99) présente une première extrémité (75, 95) pourvue d'une première surface préparée (70, 90) et une seconde extrémité pourvue d'une seconde surface préparée (70, 90), la première surface préparée (70, 90) et la seconde surface préparée (70, 90) interrompant la surface arrondie du périmètre extérieur et comportant chacune une encoche découpée qui s'étend jusqu'à une profondeur à partir du périmètre extérieur de l'élément de couplage (79, 99);
un premier élément de retenue (74, 76, 94, 96) attaché par l'intermédiaire d'une fixation métallurgique à la première surface préparée (70, 90) des éléments de couplage (79, 99); et
un second élément de retenue (74, 76, 94, 96) attaché par l'intermédiaire d'une fixation métallurgique à la seconde surface préparée (70, 90) des éléments de couplage (79, 99).

2. Courroie à chaîne (3) selon la revendication 1, dans laquelle les encoches de la première surface préparée (70) et de la seconde surface préparée (70) sont rectangulaires et la première surface préparée (70) reçoit un premier élément de retenue cylindrique (74) et la seconde surface préparée (70) reçoit un second élément de retenue cylindrique (74).

3. Courroie à chaîne (3) selon la revendication 1, dans laquelle les encoches de la première surface préparée (70) et de la seconde surface préparée (70) sont rectangulaires et la première surface préparée (70) reçoit un premier élément de retenue de prisme rectangulaire (76) et la seconde surface préparée (70) reçoit un second élément de retenue de prisme rectangulaire (76).

4. Courroie à chaîne (3) selon la revendication 1, dans laquelle les encoches de la première surface préparée (90) et de la seconde surface préparée (90) sont en forme de v et la première surface préparée (90) reçoit un premier élément de retenue de prisme rectangulaire (96) et la seconde surface préparée (90) reçoit un second élément de retenue de prisme rectangulaire (96).

5. Courroie à chaîne (3) selon la revendication 1, dans laquelle les encoches de la première surface préparée (90) et de la seconde surface préparée (90) sont des encoches en forme de v et la première surface préparée (90) reçoit un premier élément de retenue cylindrique (94) et la seconde surface préparée (90) reçoit un second élément de retenue cylindrique (94).

6. Courroie à chaîne (3) selon la revendication 1, dans laquelle le premier élément de retenue (74, 76, 94, 96) est attaché à la première surface préparée (70, 90) et le second élément de retenue (74, 76, 94, 96) est attaché à la seconde surface préparée (70, 90) par soudage.

7. Courroie à chaîne (3) selon la revendication 1, dans laquelle les éléments de couplage (79, 99) comprennent au moins une broche basculante (72, 92).

8. Courroie à chaîne (3) selon la revendication 1, dans laquelle les éléments de couplage (79, 99) comprennent une broche (71, 72, 91, 92).
